# EUROPÄISCHE PATENTSCHRIFT

(11) **EP 0 515 832 B1**
(45) Veröffentlichungstag und Bekanntmachung des Hinweises auf die Patenterteilung: **04.01.1995**
(21) Anmeldenummer: 92106841.7
(22) Anmeldetag: 22.04.1992
(51) Int. Cl.: B23D 21/04, B23B 5/16

(54) **Maschine zum Abstechen von Rohrabschnitten von einem Rohr**
Machine to cut off pieces of a tube
Machine à couper des pièces d'un tube

(30) Priorität: 29.05.1991 DE 4117574
(43) Veröffentlichungstag der Anmeldung: 02.12.1992
(73) Patentinhaber: F.H. JUNG MASCHINENFABRIK GmbH, D-65614 Beselich (DE)
(72) Erfinder: Kürten, Konrad, W-6250 Limburg (DE)
(74) Vertreter: Nix, Frank Arnold, Dr.

(56) Entgegenhaltungen:
- FR-A- 2 155 761
- US-A- 3 724 303

## Beschreibung

Die vorliegende Erfindung bezieht sich auf eine Maschine zum Abstechen von Rohrabschnitten von einem Rohr und geht aus von einer Maschine, bei der das Rohrwerkstück in wenigstens zwei beidseits der Schnittstelle gelegenen Einspannvorrichtungen gehalten ist und die eine auf dem Abschnitt zwischen den Fixierstellen des Rohres umlaufende, in Axialrichtung ortsfeste Planscheibe aufweist, die in Radialrichtung vorschiebbare Werkzeugstähle zum Abstechen und zum Anfasen des äußeren und des inneren Schnittrandes trägt, wobei die den abzustechenden Rohrabschnitt fixierende Einspannvorrichtung in Axialrichtung verfahrbar ist.

Bei bekannten Maschinen dieser Art, für die als Beispiel die Ausbildung gemäß US-PS 3 563 119 genannt werden kann, muß der Anfasstahl zum Anfasen der Innenränder der Schnittflächen in den Innenbereich des Rohres und des abgestochenen Abschnitts vorgeschoben werden und hierzu ist erforderlich, daß sowohl der abgestochene Rohrabschnitt als auch die Vorratslänge des Rohres von der Schnittstelle zurück auseinander bewegt werden, um den Anfasstahl zwischen den Schnittflächen durchzulassen. Während diese Rückbewegung beim abgestochenen Abschnitt gewöhnlich keine Probleme bereitet, ist die Rückbewegung der Vorratslänge, die anfänglich noch eine große Masse und damit Trägheit aufweist, schwieriger und erfordert einen großen konstruktiven Aufwand und umständliche Verfahrensabläufe, die sich überdies nicht sehr beschleunigen lassen.

Aus der DE-PS 39 36 176 ist allerdings eine Ausbildung bekannt, bei der die axiale Beweglichkeit der Rohrvorratslänge deshalb nicht erforderlich ist, weil die Planscheibe mit den von ihr getragenen Werkzeugen in Axialrichtung beweglich ausgebildet ist, so daß anschließend an das Abstechen die Schnittränder durch die Aufeinanderfolge von seitlichen Axialverschiebungen und radialen Vorschubbewegungen des Anfasstahls angefast werden können. Jedoch ist der konstruktive Aufwand hoch, der für die axiale Beweglichkeit der ganzen Planscheibe getrieben werden muß.

Aufgabe der vorliegenden Erfindung ist die Schaffung einer Maschine zum Abstechen von Rohrabschnitten von einem Rohr, mit der anschließend an das Abstechen das Anfasen der Außen- und Innenränder der Schnittflächen schnell und einfach durchgeführt werden kann. Dabei soll es vor allem entbehrlich sein, das Vorratsrohrwerkstück axial zurückzuschieben, um den Anfasstahl an die Innenkante der Schnittfläche zu bringen, und anschließend wieder vorzuschieben, um das Innenfasen zu bewirken.

Die Lösung der gestellten Aufgabe gelingt erfindungsgemäß dadurch, daß wenigstens eines der das Innenfasen bewirkenden Werkzeuge gegenüber der Planscheibe unabhängig vom Radialvorschub in Axialrichtung antreibbar beweglich ist.

An sich ist aus der US-PS 4 430 913 eine Maschine zum Ablängen von Rohren bekannt, bei der ein an einer Planscheibe umlaufender Werkzeugstahl, nämlich eine Entgratmesser, sowohl eine radiale als auch eine axiale Vorschubbewegung ausführt. Hier geht es jedoch nicht um das Abstechen von Rohrabschnitten, bei denen beidseits der Schnittstelle Halterungen vorgesehen sein müssen, sondern nur um das Zurichten eines Rohrendes, wobei nur ein ringförmiges Abfallstück anfällt, was weder gehalten, noch anschließend angefast werden muß.

Abgesehen davon ist die Bewegung des Entgratmessers in Axialrichtung keine angetriebene und damit selbständig steuerbare Bewegung, sondern eine von der radial einwärts gerichteten Bewegung abgeleitete Hilfsbewegung, die nur die Position des Entgratmessers herstellt, die beim anschließenden Entgratvorgang bei der radial auswärts gerichteten Bewegung erforderlich ist. Ein eigener Antrieb in Axialrichtung ist nicht vorgesehen. Es findet nur eine von den Radialverschiebungen abgeleitete Hin- und Herschaltung des Entgratmessers statt, die ein Innenfasen nicht bewirkt und dies auch gar nicht könnte.

Ähnliches gilt für eine aus der US-PS 3 724 303 bekannte Maschine zum Abstechen von Rohrabschnitten von einem Rohr, bei der zwar die inneren und äußeren Schnittränder angefast werden, hierzu jedoch drei an einer Planscheibe verteilt angeordnete Faswerkzeuge notwendig sind, von denen ein breit ausgebildetes Faswerkzeug die beiden äußeren Schnittränder gleichzeitig anfast und die beiden anderen so schmal ausgebildet sind, daß sie durch den Schnittspalt ins Rohrinnere vorgeschoben werden können und jeweils einen der inneren Schnittränder anfasen. Dabei vollführen diese Faswerkzeuge eine Vorschubbewegung, die eine Axialkomponente aufweist, was mittels Führungsbolzen und Nockenschlitzen erzielt wird. Somit ist auch hier die Axialbewegung eine von der angetriebenen Radialbewegung abgeleitete und nur gleichzeitig mit dieser mögliche Bewegung. Jeweils eigene Antriebe für den Radialvorschub und den Axialvorschub von Innenfaswerkzeugen sind auch hier nicht vorhanden.

Die Erfindung wird nachfolgend durch die Beschreibung von Ausführungsbeispielen weiter erläutert. Es zeigt:

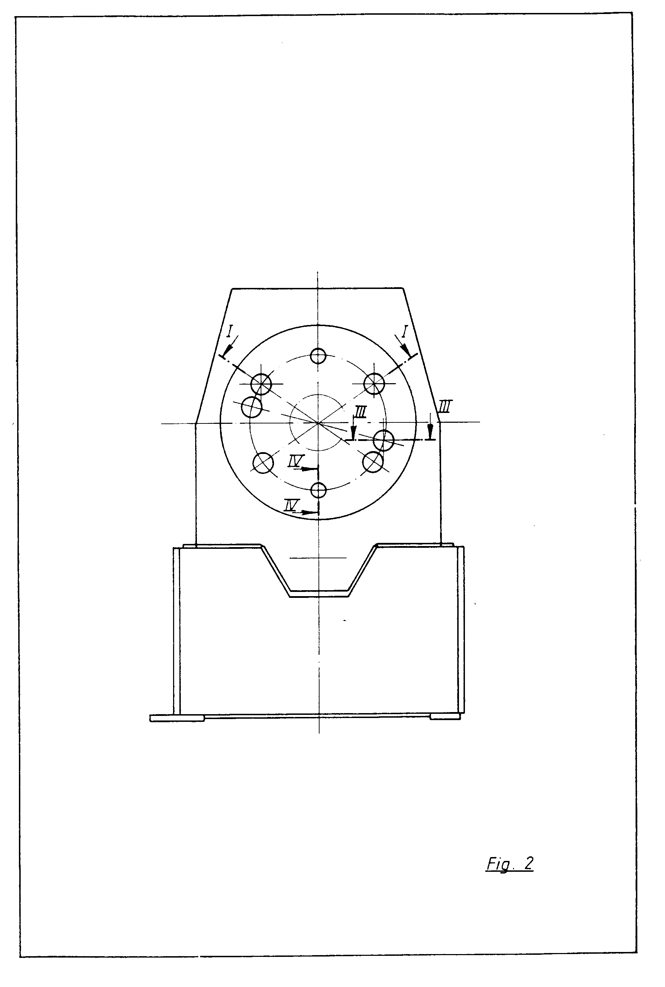

Fig. 1 einen Längsschnitt einer erfindungsgemäßen Maschine zum Abstechen von Rohrabschnitten von einem Rohr gemäß der Schnittlinie I-I in Fig. 2;
Fig. 2 eine schematische Stirnansicht der Vorrichtung zur Verdeutlichung der Lage der verschiedenen Schnittlinien;
Fig. 3 einen teilweisen Längsschnitt gemäß der Schnittlinie III-III in Fig. 2;
Fig. 4 einen teilweisen Längsschnitt gemäß der Schnittlinie IV-IV in Fig. 2;
Fig. 5 eine Ausbildungsabwandlung der Bewegungsumlenkungskinematik in einem teilweisen Schnitt;
Fig. 6 die Draufsicht auf einen verspreizbaren Anfasstahlhalter, teilweise geschnitten, wobei die Abbildung a) den zusammengeschwenkten und Abbildung b) den verspreizten Zustand zeigt;
Fig. 7 schematisch den Ablauf der Bearbeitungsgänge mit einem einteiligen Anfasstahl;
Fig. 8 schematisch den Ablauf der Bearbeitungsgänge mit einem zweiteiligen verspreizbaren Anfasstahl.

In einem Gehäuse 1 ist an dessen hinterem Ende ein Tragrohr 3 starr eingebaut, welches durch das Gehäuse nach vorn auskragt und in dem eine Einspannvorrichtung 5 für das Rohrwerkstück 7, und zwar dessen Vorratslänge 7a, angeordnet ist. Der abzustechende Abschnitt 7b des Rohrwerkstücks 7 ist in einer nur schematisch angedeuteten Einspannvorrichtung 9 gehalten.

Die Einspannvorrichtung 5 besteht aus einem Druckrohr 12, an dessen hinterem Ende ein Kolben 14 angeordnet ist, welcher durch Druckbeaufschlagung eines im hinteren Ende des Tragrohrs 3 ausgearbeiteten Zylinderraums 16 nach vorn beaufschlagbar ist. Am vorderen Ende des Druckrohrs 12 ist dessen Innenfläche konisch aufgeweitet und wirkt mit den Backen 18 einer Spannzange 20 in der Weise zusammen, daß bei einem Vorschieben des Druckrohrs 12 die Backen 18 sich fest um das Rohrwerkstück 7 schließen.

Auf dem Tragrohr 3 ist drehbar und koaxial eine Antriebsbuchse 23 aufgesetzt und auf dieser mittels Wälzlagern 25, 26 gelagert. Das hintere Antriebsende 28 der Antriebsbuchse 23 ist zum Angriff eines nicht gezeigten Drehantriebs ausgebildet; im betrachteten Beispiel mittels einer Außenverzahnung, mit der das Zahnrad eines Antriebsmotors kämmen kann. Ebenso ist eine Ausbildung in der Weise möglich, daß das Antriebsende 28 von einer Kette oder einem Riemen eines Antriebsmotors umschlungen ist.

Am vorderen Ende der Antriebsbuchse 23 ist eine Planscheibe 30 befestigt, an deren vorderer Stirnfläche in radialen Führungen gegenüberliegend Planschieber 32, 34 verschieblich angeordnet sind. Der Planschieber 32 trägt als Werkzeug einen Abstechstahl 38. Am Planschieber 34 ist um eine Achse 40 ein Stahlhalterträger 42 schwenkbar angelenkt, der seinerseits einen Stahlhalter 44 mit einem an dessen Ende befestigten Anfasstahl 46 als Werkzeug trägt. Der Anfasstahl 46 hat vier Schneidränder, von denen je zwei unter einem Winkel zur auf der Maschinenachse rechtwinklig stehenden Querebene geneigt sind und symmetrisch zu dieser verlaufen.

In der Nähe ihres vorderen Endes ist die Antriebsbuchse 23 mittels eines Stützlagers 50 abgestützt, welches in der Vorderwand des Gehäuses 1 eingebaut ist und dessen Innenring einen auf der Antriebsbuchse 23 sitzenden und mit diesem rotierenden Stützring 52 umschließt.

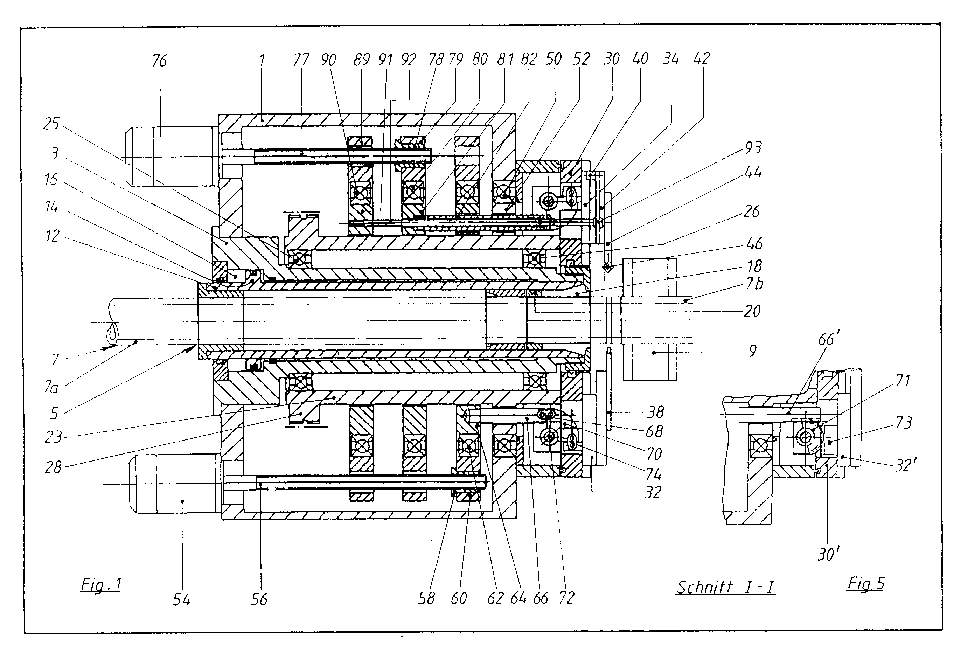

Der radiale Vorschub des Abstechstahls 38 wird bewirkt durch die in der unteren Hälfte von Fig. 1 ersichtliche Kinematikkette, zu der ein Antriebsmotor 54 für den Abstechstahlvorschub gehört, welcher eine Gewindespindel 56 treibt, die mit einer Mutter 58, welche in einem Verschiebe-Außenring 60 eingebaut ist, zusammenwirkt. Zur Erzielung minimaler Reibung findet zweckmäßigerweise ein Kugelumlauf-Gewindespindeltrieb Anwendung. Im Verschiebe-Außenring 60 sitzt ein Verschiebungs-Übertragungslager 62, dessen Innenring einen mit der Antriebsbuchse 23 rotierenden und auf dieser in Axialrichtung verschieblichen Verschiebe-Innenring 64 umschließt. Durch das Verschiebungs- Übertragungslager 62 sind der Verschiebe-Außenring 60 und der Verschiebe-Innenring 64 drehbar und axial unverschieblich miteinander verbunden und eine Drehung der Gewindespindel 56 bewirkt auf diesem Wege eine Axialverschiebung des mit der Antriebsbuchse 23 rotierenden Verschiebe-Innenrings 64.

Um die Zeichnung nicht zu überladen, ist nicht gezeigt, wie zur Vermeidung von Verkantungen der Verschiebe-Außenring-Innenring-Einheit bei der genannten Verschiebung im Verschiebe-Außenring 60 an der dem Motor 54 diametral gegenüberliegenden Stelle eine gleiche Mutter eingebaut ist, welche mit einer der Gewindespindel 56 entsprechenden Gewindespindel zusammenwirkt, wobei durch eine geeignete Getriebekinematik sichergestellt ist, daß die beiden Gewindespindeln sich synchron und gleichsinnig drehen. Beispielsweise sitzt im hinteren Bereich des Gehäuses auf jeder der betrachteten Gewindespindeln ein Zahnrad, das mit einem großen Zentralrad kämmt, welches auf dem hinteren Abschnitt des Tragrohrs 3 gelagert ist. Auf diese Weise wird die vom Vorschubmotor 54 erzeugte Drehbewegung der Gewindespindel 56 über das genannte Zentralrad synchron und gleichsinnig auf das gegenüberliegende Zahnrad und die mit diesem verbundene gegenüberliegende Gewindespindel übertragen.

In den Verschiebe-Innenring 64 ist eine Schubstange 66 eingeschraubt, die nach vorn durch eine Bohrung des Stützrings 52 zur Planscheibe 30 vorragt und an deren vorderem Ende eine Lasche 68 angelenkt ist, deren anderes Ende an einem Umlenksegment 70 gelenkig angreift, welches an der Planscheibe 30 um eine Achse 72 schwenkbar ist. Das andere Ende des Umlenksegments 70 ist über eine weitere Lasche 74 gelenkig mit dem Planschieber 32 verbunden, sodaß eine Axialverschiebung der Schubstange 66 auf dem genannten Weg in einen Radialvorschub des Planschiebers 32 und damit des Abstechstahls 38 umgesetzt wird.

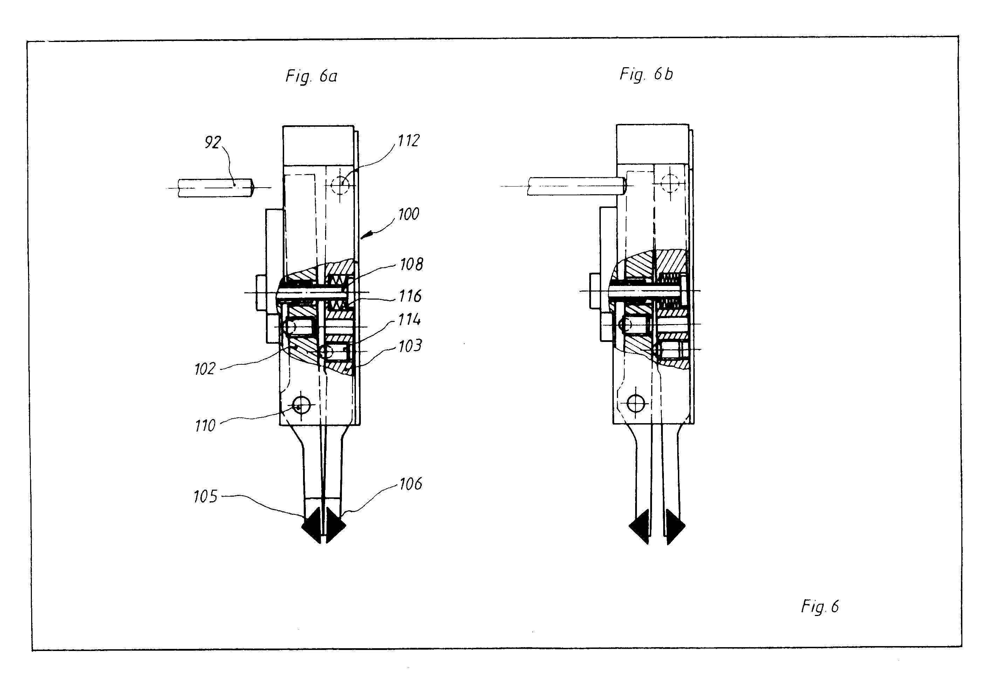

In Fig. 5 ist eine Variante für die Umsetzung dieser Bewegung gezeigt. Hier findet ein um die Achse 72 schwenkbares Zahnsegment 71 Anwendung, welches mit einem vorderen Zahnstangenabschnitt der Schubstange 66' sowie mit einem rechtwinklig hierzu verlaufenden Zahnstangenansatz 73 des Planschiebers 32' kämmt. Ersichtlicherweise wird auch hier die Axialbewegung der Schubstange 66' in eine radiale Vorschubbewegung des Planschiebers 32' auf der Planscheibe 30' umgesetzt.

In ähnlicher Weise geschieht der Vorschub des Planschiebers 34 des Anfasstahls 46. Ein Antriebsmotor 76 für den Radialvorschub des Anfasstahls treibt eine Gewindespindel 77, auf der eine Mutter 78 sitzt, welche in einem Verschiebe-Außenring 79 eingebaut ist. Zwischen diesem und einem Verschiebe-Innenring 81 sitzt ein diese drehbar und axial unverschieblich verbindendes Verschiebungs-Übertragungslager 80. Auch hier ist eine mit der Gewindespindel 77 synchronisierte, diametral gegenüberliegende Gewindespindel vorhanden, die auf eine im Verschiebe-Außenring 79 diametral gegenüberliegend sitzende Mutter wirkt. Außerdem sind im Verschiebe-Außenring 79 an zwei gegenüberliegenden Stellen Bohrungen für den Durchtritt der Gewindespindel 56 und der dieser gegenüberliegenden anderen Gewindespindel der Abstechstahl-Vorschubkinematik vorhanden.

In den Verschiebe-Innenring 81 ist eine als Rohr ausgebildete Schubstange 82 eingeschraubt, deren vorderes Ende über wenigstens eine Lasche mit einem Umlenksegment verbunden ist, dessen anderes Ende mittels einer weiteren Lasche am Planschieber 34 angreift. Diese Bewegungsumsetzung entspricht der für den Abstechstahlvorschub beschriebenen, weshalb die hierbei mitwirkenden entsprechenden Teile nicht mehr mit eigenen Bezugszeichen versehen sind. Eine Axialverschiebung des Schubrohrs 82 wird auf die betrachtete Weise übersetzt in einen Radialvorschub des Planschiebers 34 und damit des Anfasstahls 46.

Eine dritte Verschiebekinematik der betrachteten Art bewirkt die Schwenkung des Stahlhalterträgers 42 um die Achse 40 am Planschieber 34 und damit eine im wesentlichen in Axialrichtung verlaufende Bewegung des Anfasstahls 46.

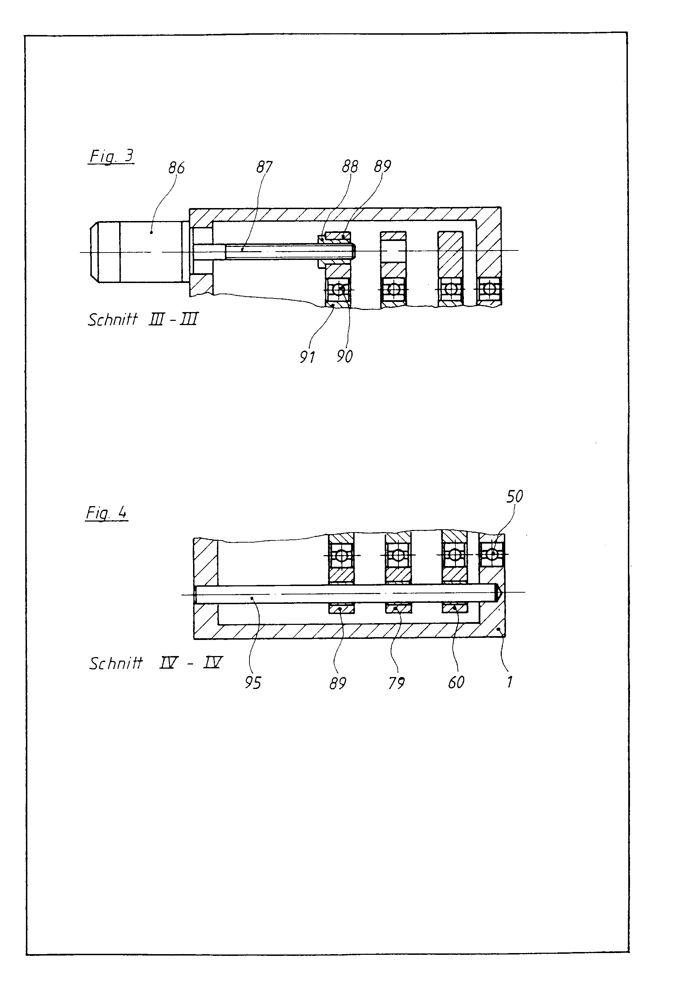

Ein Antriebsmotor 86 ( Fig. 3) treibt eine Gewindespindel 87, die mit einer Mutter 88 in einem Verschiebe-Außenring 89 zusammenwirkt, welcher mittels eines Verschiebungs-Übertragungslagers 90 mit einem Verschiebe-Innenring 91 drehbar und axial unverschieblich verbunden ist. Auch hier ist in gleicher Weise wie bei den vorstehend beschriebenen Kinematiken eine gegenüberliegende synchron angetriebene Gewindespindel vorhanden. Im Verschiebe-Außenring 89 sind je zwei gegenüberliegende Bohrungen für den Durchtritt der Gewindespindel 77 und der zu dieser gehörenden paarigen Gewindespindel sowie der Gewindespindel 56 und der zu dieser gehörenden paarigen Gewindespindel vorhanden.

In den Verschiebe-Innenring 91 ist eine Schubstange 92 eingeschraubt, die nach vorn durch das Schubrohr 82 verläuft und in einem Kopf 93 endet, welcher mittels einer Gleitführung derart mit dem Stahlhalterträger 42 zusammenwirkt, daß er Bewegungen desselben in Radialrichtung nicht verhindert, Bewegungen in Axialrichtung jedoch überträgt und hierdurch Schwenkbewegungen des Stahlhalterträgers 42 um die Achse 40 erzeugt.

Zur Gewährleistung präziser Verschiebebewegungen der Verschieberingeinheiten sind zwischen den Stirnwänden des Gehäuses 1 noch axial verlaufende Führungsstangen 95 eingebaut, welche durch entsprechende, mit Gleitbuchsen versehene Bohrungen der Verschiebe-Außenringe 60, 79, 89 greifen.

Es ist zu sehen, wie die beschriebene Ausbildung der Abstechmaschine es ermöglicht, die an der rotierenden Planscheibe 30 umlaufenden Werkzeuge Abstechstahl 38 und Anfasstahl 46 bezüglich ihres Vorschubs in Radialrichtung zu steuern und dem Anfasstahl 46 darüber hinaus Bewegungen in Axialrichtung zu erteilen.

Fig. 6 zeigt einen verspreizbaren Anfasstahlhalter 100, der im wesentlichen aus zwei schwenkbaren Armen 102, 103 besteht, an deren nach innen weisenden Enden je ein Anfasstahl 105, 106 befestigt ist. Der in der Zeichnung linker Arm 102 ist um eine radial innenliegende Achse 110 und der rechte Arm 103 um eine radial außenliegende Achse 112 um einen geringen Winkelbetrag schwenkbar. An einer in Radialrichtung zwischen den Achsen liegenden Stelle greift durch beide Arme ein Zugstab 108, dessen linkes Ende an einem gestellfesten Element befestigt ist und an dessen rechtem Ende ein Kopf ausgebildet ist, welcher in einer Ausnehmung des rechten Arms 103 liegt, wobei zwischen dem Boden dieser Ausnehmung und dem Kopf ein Tellerfederpaket 116 eingesetzt ist, das den rechten Arm 103 im Sinne einer Schwenkung im Uhrzeigersinn um die Achse 112 beaufschlagt. An einer in Radialrichtung zwischen dem Zugstab 108 und der Achse 110 des linken Arms 102 liegenden Stelle ist in den rechten Arm 103 ein Kugeleinsatz 114 eingeschraubt, dessen Kugel druckübertragend mit dem Arm 102 in Berührung steht. Die Schubstange 92 wirkt auf das radial außenliegende Ende des linken Arms 102.

In der in Fig. 6 a) gezeigten Grundstellung ist der rechte Arm 103 unter der Wirkung des Federpakets 116 im Sinne einer Schwenkung im Uhrzeigersinn um die Achse 112 beaufschlagt und drückt mit seinem Kugeleinsatz 114 auf die gegenüberliegende Stelle des linken Arms 102, so daß dieser im Gegenuhrzeigersinn um seine Achse 110 beaufschlagt ist. Die Arme sind zusammengeschwenkt und beide Anfasstähle 105, 106 stehen dicht beisammen.

Zum Verspreizen der Arme und Auseinanderbewegen der Anfasstähle drückt die Schubstange 92 auf das radial außenliegende Ende des linken Arms 102 und schwenkt diesen dadurch im Uhrzeigersinn um seine Achse 110. Durch diese Schwenkung wird der Kugeleinsatz 114 zurückgedrückt und dadurch der rechte Arm 103 im Gegenuhrzeigersinn um seine Achse 112 geschwenkt. Beide Arme bewegen sich in die in Fig. 6b gezeigte Spreizstellung, in der die Anfasstähle 105, 106 mit Abstand voneinander stehen.

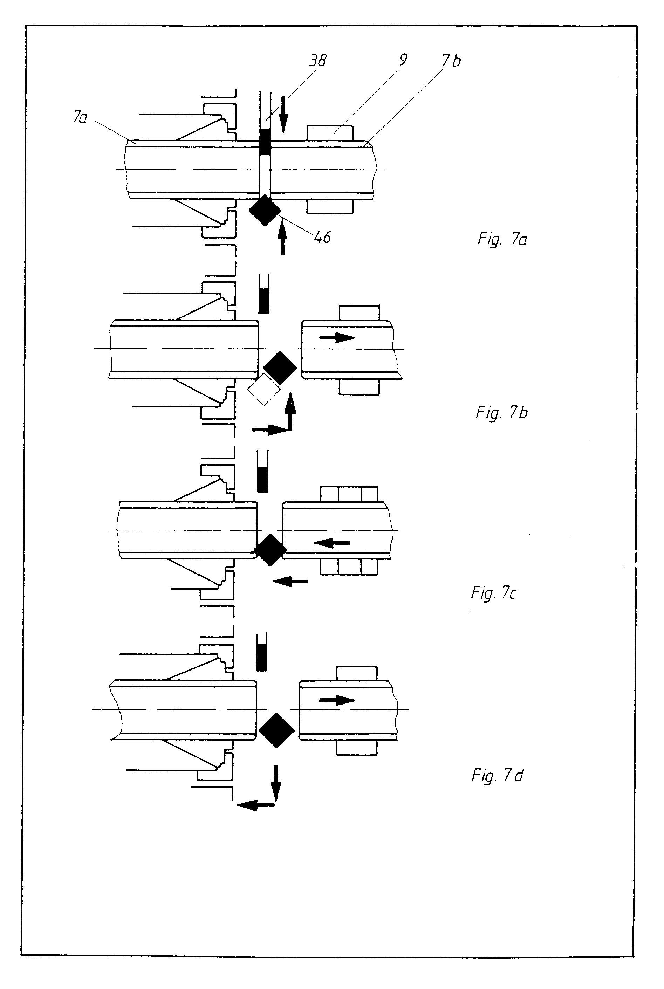

Mit der beschriebenen Abstechvorrichtung können verschiedene Abläufe der erforderlichen Bearbeitungsgänge verwirklicht werden, die alle gemeinsam haben, daß die in der Zeichnung linke Vorratslänge 7a des Rohrwerkstücks nicht ausgespannt und in Axialrichtung bewegt werden muß. Fig. 7 zeigt eine bevorzugte Abfolge der Bearbeitungsschritte.

Nach Einspannen des Rohrwerkstücks 7 in der Einspannvorrichtung 5 sowie der Einspannvorrichtung 9 und Einschaltung des Drehantriebs der Antriebsbuchse 23 wird durch radial einwärts gerichteten Vorschub des Abstechstahls 38 der abzustechende Abschnitt 7b von der Vorratslänge 7a abgeschnitten. Danach werden durch radial einwärts gerichteten Vorschub des mittig zwischen den Schnittflächen positionierten Anfasstahls 46 die Außenränder der Schnittflächen angefast (Fig. 7a).

Danach wird der Abstechstahl 38 zurückgefahren und der abgestochene Abschnitt 7b mittels der Einspannvorrichtung 9 von der Vorratslänge 7a weg - in den Zeichnungen nach rechts - verfahren, bis die Schnittflächen eine Entfernung voneinander aufweisen, die einen Durchtritt des Anfasstahls 46 gestattet. Der Anfasstahl 46 wird zunächst in Axialrichtung nach rechts und dann radial einwärts ins Innere zwischen den Rohrenden bewegt (Fig. 7b), worauf der Anfasstahl wieder in Axialrichtung zurück nach links sowie der abgestochene Abschnitt 7b um eine bestimmte Strecke zurück nach links so verfahren werden, daß der Anfasstahl, jetzt mit seinen rückwärtigen Schneiden den Innenrändern der Schnittflächen gegenüberliegend, mittig zwischen diesen zu stehen kommt. Jetzt werden durch einen Vorschub des Anfasstahls radial nach außen die Innenränder der Schnittflächen angefast (Fig. 7c).

Schließlich wird der abgestochene Abschnitt 7b wieder nach rechts verfahren bzw. sofort ausgespannt und abtransportiert und der Anfasstahl 46 wird soweit nach rechts verfahren, bis er vom Schnittrand der Vorratslänge 7a freikommt und radial nach außen aus dem Rohrbereich zurückgezogen werden kann. Danach wird auch die Einspannung 5 gelöst und das Rohrwerkstück wird für den nächsten Schnitt vorgeschoben.

Die vorliegend beschriebene Verfahrenssteuerung ist darauf abgestellt, daß der Anfasstahl 46 mit seinen inneren und äußeren Schneidkanten jeweils gleichzeitig beide äußeren und inneren Schnittränder von Vorratslänge 7a und abgestochenem Abschnitt 7b erfaßt. Es versteht sich, daß auch eine andere Steuerung der jeweiligen Vorschubantriebe und damit ein anderer Verfahrensablauf möglich ist. Beispielsweise können, wenn die Rückbewegung des abgestochenen Abschnitts 7b gemäß Fig. 7c als zu aufwendig erscheint, die Innenränder der Schnittflächen aufeinanderfolgend angefast werden, nämlich der Innenrand der Vorratslänge 7a durch eine Bewegung zurück nach links und der Innenrand des abgestochenen Abschnitts 7b durch eine Bewegung noch weiter nach rechts.

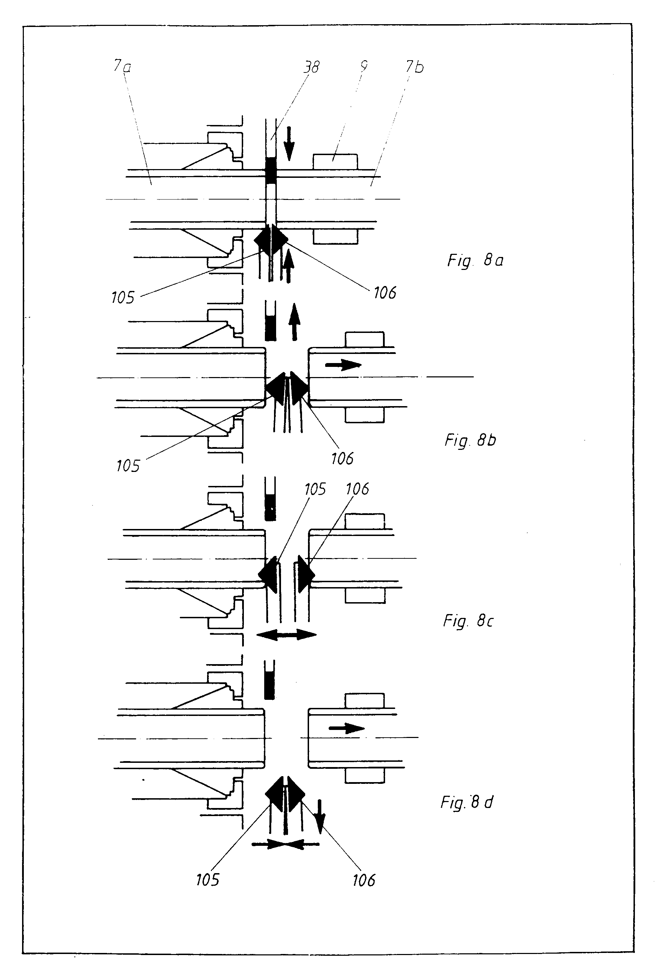

In Fig. 8 sind die Bearbeitungsschritte bei Verwendung eines verspreizbaren Anfasstahlhalters 100 illustriert: Hier sind der Abstechstahl 38 und der Anfasstahlhalter 100 mit seinen Anfasstählen 105, 106 von vornherein in Axialrichtung verschieden positioniert, nämlich so, daß der Anfasstahlhalter die mittige Position zwischen den Schnittenden einnimmt, nachdem der abgestochene Abschnitt 7b nach rechts verfahren wurde.

Zunächst wird gemäß Fig. 8a der Abstechschnitt durchgeführt. Danach wird gemäß Fig. 8b der abgestochene Abschnitt 7b nach rechts von der Vorratslänge 7a entfernt, bis die Mittenebene des Anfasstahlhalters 100 und die Mittenebene zwischen den Schnittenden zusammenfallen. In dieser Stellung reicht der Abstand zwischen den Schnittenden zum Durchtritt der Anfasstähle bei zusammengeschwenkten Armen des Anfasstahlhalters 100 aus.

Zunächst werden bei gespreiztem Anfasstahlhalter die Außenränder der Schnittflächen angefast. Danach werden die Arme des Anfasstahlhalters zusammengeschwenkt, dieser wird radial einwärts verschoben und durch erneutes Spreizen werden die Innenränder der Schnittflächen angefast. Nach erneutem Zusammenschwenken der Arme des Anfasstahlhalters wird dieser radial auswärts aus dem Bereich des Rohrwerkstücks 7 bewegt und die Bearbeitung ist beendet.

## Patentansprüche

1. Maschine zum Abstechen von Rohrabschnitten (7b) von einem Rohr (7), welches drehfest in wenigstens zwei beidseits der Schnittstelle gelegenen Einspannvorrichtungen (5, 9) gehalten ist und mit einer auf dem Abschnitt zwischen den Fixierstellen des Rohres umlaufenden, in Axialrichtung ortsfesten Planscheibe (30), die in Radialrichtung vorschiebbare Werkzeuge (46, 105, 106) zum Abstechen und zum Anfasen des äußeren und des inneren Schnittrandes trägt,
wobei die den abzustechenden Rohrabschnitt fixierende Einspannvorrichtung in Axialrichtung verfahrbar ist,
dadurch gekennzeichnet, daß wenigstens eines der das Innenfasen bewirkenden Werkzeuge (46; 105, 106) gegenüber der Planscheibe (30) unabhängig vom Radialvorschub in Axialrichtung antreibbar beweglich ist.

2. Maschine nach Anspruch 1, dadurch gekennzeichnet, daß die radialen bzw. axialen Vorschubbewegungen der Werkzeuge (38; 46; 105; 106) gegenüber der Planscheibe (30) bewirkt werden durch Schubstangen (66, 82, 92), welche parallel zur Maschinenachse auf einer die Planscheibe (30) tragenden Antriebsbuchse (23) angeordnet sind und an ihrem hinteren Ende mit einem drehfest und axialverschieblich auf der Antriebsbuchse (23) sitzenden Verschiebe-Innenring (64, 81, 91) verbunden sind, welcher von einem Verschiebungs-Übertragungslager (62, 80, 90) umfaßt ist, dessen Außenring (60, 79, 89) gegenüber dem Gehäuse (1) mittels eines Verschiebeantriebs in Axialrichtung verschieblich ist.

3. Maschine nach Anspruch 2, dadurch gekennzeichnet, daß der Verschiebeantrieb jedes Verschiebe-Außenrings (60, 79, 89) gebildet ist von wenigstens einer Gewindespindel (56, 77, 87), welche mit einer im Verschiebe-Außenring sitzenden Mutter (58, 78, 88) zusammenwirkt.

4. Maschine nach Anspruch 3, dadurch gekennzeichnet, daß der Verschiebeantrieb jedes Verschiebe-Außenrings (60, 79, 89) gebildet ist von einer Mehrzahl von gleichmäßig auf dem Umfang verteilten Gewindespindeln, die zur synchronen Drehung kinematisch miteinander verbunden sind.

5. Maschine nach Ansprüchen 3 und/oder 4, dadurch gekennzeichnet, daß die Gewindespindeln mit ihren Muttern Kugelumlauf-Gewindespindeltriebe sind.

6. Maschine nach einem oder mehreren der vorhergehenden Ansprüche, dadurch gekennzeichnet, daß die Übertragung der Axialbewegung der Schubstangen (66, 82) auf die Werkzeuge zur Bewirkung von deren Radialvorschub über ein in der Planscheibe (30) gelagertes Umlenksegment (70) erfolgt, an dessen beiden Kreisbogenenden je wenigstens eine Lasche (68, 74) angelenkt ist, deren eine mit der Schubstange verbunden ist und deren andere mit einem das jeweilige Werkzeug tragenden Planschieber (32, 34) verbunden ist.

7. Maschine nach einem oder mehreren der Ansprüche 1 bis 5, dadurch gekennzeichnet, daß die Übertragung der Axialbewegung der Schubstangen (66') auf die Werkzeuge zur Bewirkung von deren Radialvorschub über ein in der Planscheibe (30') gelagertes Zahnsegment (71) erfolgt, das mit einem Zahnstangenabschnitt am Ende der Schubstange (66') und einem Zahnstangenansatz (73) des das jeweilige Werkzeug tragenden Planschiebers (32') verbunden ist.

8. Maschine nach einem oder mehreren der vorhergehenden Ansprüche, dadurch gekennzeichnet, daß die im radialen Vorschubantrieb des Anfasstahls (46) mitwirkende Schubstange als hohles Schubrohr (82) ausgebildet ist und die die Axialbewegung des Anfasstahls (46) bewirkende Schubstange (92) koaxial im Inneren dieses Schubrohrs (82) verläuft.

9. Maschine nach einem oder mehreren der vorhergehenden Ansprüche, dadurch gekennzeichnet, daß ein Schubstangenkopf (93) am vorderen Ende der die Axialbewegung des Anfasstahls (46) übertragenden Schubstange (92) mit dem Stahlhalterträger (42) des Anfasstahls (46) in Axialrichtung kraftübertragend und dessen radiale Vorschubbewegungen zulassend verbunden ist.

10. Maschine nach einem oder mehreren der vorhergehenden Ansprüche, dadurch gekennzeichnet, daß der Stahlhalterträger (42) des Anfasstahls (46) an seinem Planschieber (34) um eine Achse (40) schwenkbar angelenkt ist, welche in der Nähe des Außenumfangs der Planscheibe (30) in Tangentialrichtung verläuft.

11. Maschine nach einem oder mehreren der vorhergehenden Ansprüche, gekennzeichnet durch einen einstückigen Anfasstahl (46) mit vier Schneidkanten, die vier Ecken bilden, von denen zwei in einer rechtwinklig auf der Maschinenachse stehenden Ebene und die zwei anderen auf einer parallel zur Maschinenachse verlaufenden Linie liegen, wobei die das Anfasen der Außenränder der Schnittflächen bewirkenden, radial innenliegenden Schneidkanten einerseits sowie die das Anfasen der Innenränder der Schnittflächen bewirkenden, radial außenliegenden Schneidkanten andererseits jeweils gleiche Winkel mit der rechtwinklig auf der Maschinenachse stehenden Ebene einschließen.

12. Maschine nach einem oder mehreren der Ansprüche 1 bis 10, gekennzeichnet durch einen bei Beaufschlagung durch die zugehörige Schubstange (92) verspreizbaren Anfasstahlhalter (100) mit zwei Schwenkarmen (102, 103), an deren Enden je ein Anfasstahl (105, 106) befestigt ist.

13. Maschine nach Anspruch 12, dadurch gekennzeichnet, daß zur Bewirkung gegensinniger Schwenkungen der eine Schwenkarm (102) um eine radial innen gelegene Achse (110) und der andere Schwenkarm (103) um eine radial außen gelegene Achse (112) schwenkbar ist, wobei die Schubstange (92) am einen Arm (102) außen angreift und dieser an einer zwischen den Achsen (110, 112) gelegenen Stelle druckübertragend auf den anderen Arm (103) wirkt.

## Claims

1. Machine for cutting off sections (7b) of a pipe (7) which is held fixed against rotation in at least two clamping devices (5, 9) applied to each side of the cutting point respectively, and having a face plate (30) rotating on the section between the fixing points of the pipe and fixed in the axial direction, the face plate (30) carrying tools (46, 105, 106) which can be advanced in the radial direction for cutting off and chamfering the outer and the inner cut surface, whereby the clamping device fixing the pipe section to be cut off can be moved in the axial direction, characterised in that at least one of the tools (46; 105, 106) effecting the inner chamfering can be drivably moved with respect to the face plate (30) in the axial direction independently of the radial thrust movement.

2. Machine according to claim 1, characterised in that the radial and axial thrust movements of the tools (38; 46; 105; 106) with respect to the face plate (30) are effected by thrust rods (66, 82, 92) which are arranged parallel to the drive shaft of the machine on a drive bushing (23) carrying the face plate (30), and are joined at their rear end to a slidable inner ring (64, 81, 91) located axially movably but held fixed against rotation on the drive bushing (23), the slidable inner ring being surrounded by a slide-transferring bearing (62, 80, 90) whose outer ring (60, 79, 89) can be moved in the axial direction with respect to the housing (1) by means of a shift drive.

3. Machine according to claim 2, characterised in that the shift drive of each slidable outer ring (60, 79, 89) is formed by at least one worm gear (56, 77, 87) which cooperates with a nut (58, 78, 88) located in the slidable outer ring.

4. Machine according to claim 3, characterised in that the shift drive of each slidable outer ring (60, 79, 89) is formed by a plurality of worm gears distributed uniformly over the circumference, which are joined together kinematically for synchronous rotation.

5. Machine according to claims 3 and/or 4, characterised in that the worm gears with their nuts are rotating ball-worm gear drives.

6. Machine according to one or more of the preceding claims, characterised in that the transfer of the axial movement of the thrust rods (66, 82) to the tools for effecting their radial thrust movement is carried out by means of a diverting segment (70) mounted in the face plate (30), at the two arc ends of which diverting segment there is articulated at least one lug (68, 74), one of which is connected to the thrust rod and the other of which is connected to a face plate (32, 34) carrying the respective tool.

7. Machine according to one or more of claims 1 to 5, characterised in that the transfer of the axial movement of the thrust rods (66') to the tools for effecting their radial thrust movement is carried out by means of a toothed segment (71) mounted in the face plate (30'), the toothed segment being connected to a rack section at the end of the thrust rod (66') and to a rack attachment (73) of the face plate (32') carrying the respective tool.

8. Machine according to one or more of the preceding claims, characterised in that the thrust rod cooperating in the radial thrust drive of the chamfered steel (46) is constructed as a hollow push rod (82), and the thrust rod (92) providing the axial movement of the chamfered steel (46) extends coaxially inside this push rod (82).

9. Machine according to one or more of the preceding claims, characterised in that a thrust rod head (93), at the front end of the thrust rod (92) transferring the axial movement of the chamfered steel (46), is connected to the steel holder carrier (42) of the chamfered steel (46) allowing transferring forces in the axial direction and allowing radial thrust movements of the chamfered steel.

10. Machine according to one or more of the preceding claims, characterised in that the steel holder carrier (42) of the chamfered steel (46) is articulated on its face plate (34) pivotably about an axis (40) which extends in the tangential direction near the outer circumference of the face plate (30).

11. Machine according to one or more of the preceding claims, characterised by a one-piece chamfered steel (46) having four cut edges which form four corners, two of which are in a plane located perpendicularly to the machine axis, and the two others on a line extending parallel to the machine axis, whereby the radially-inwardly lying cut edges causing the chamfering of the outer edges of the cut surfaces on the one hand, and the radially-outwardly lying cut edges causing the chamfering of the inner edges of the cut surfaces on the other hand respectively enclose the same angles with the plane perpendicular to the machine axis.

12. Machine according to one or more of claims 1 to 10, characterised by a chamfered steel holder (100), with two swivel arms (102, 103), which can be spread when stressed by the associated thrust rod (92), a chamfered steel (105, 106) being respectively secured at the end of each swivel arm.

13. Machine according to claim 12, characterised in that to effect oppositely-directed swivellings one swivel arm (102) is swivelled about a radially-inwardly applied axis (110) and the other swivel arm (103) is swivelled about a radially-outwardly applied axis (112), whereby the thrust rod (92) engages outwardly on one arm (102) and this acts on a point between the axes (110, 112) transferring pressure to the other arm (103).

## Revendications

1. Machine pour couper des morceaux de tube (7b) dans un tube (7) qui est tenu fixe en rotation dans au moins deux dispositifs de serrage (5, 9) disposés de part et d'autre de l'endroit de coupe, comportant un plateau circulaire (30) fixe dans la direction axiale qui tourne sur la partie située entre les points de serrage du tube et porte des outils (46, 105, 106) mobiles dans la direction radiale pour couper le tube et chanfreiner les arêtes extérieure et intérieure du bord de coupe, le dispositif de serrage qui tient le morceau de tube à couper pouvant être déplacé dans la direction axiale, caractérisée par le fait qu'au moins un des outils (46; 105, 106) qui réalise le chanfrein intérieur est mobile et peut être entraîné dans la direction axiale par rapport au plateau circulaire (30) indépendamment du déplacement dans la direction radiale.

2. Machine selon la revendication 1, caractérisée par le fait que les déplacements des outils (38; 46; 105; 106) dans les directions radiale et axiale par rapport au plateau circulaire (30) sont obtenus par l'intermédiaire de tiges de poussée (66, 82, 92) qui sont disposées parallèlement à l'axe de la machine sur un manchon d'entraînement (23) portant le plateau circulaire (30) et sont reliées à leur extrémité arrière à une bague intérieure (64, 81, 91) de commande de déplacement qui est montée fixe en rotation mais avec possibilité de déplacement dans la direction axiale sur le manchon d'entraînement (23), laquelle bague de commande de déplacement est entourée par un palier (62, 80, 90) de transmission du déplacement en translation, dont la bague extérieure (60, 79, 89) peut être déplacée dans la direction axiale par rapport au corps (1) au moyen d'un mécanisme de déplacement.

3. Machine selon la revendication 2, caractérisé par le fait que le mécanisme de déplacement de chaque bague extérieure (60, 79, 89) de commande de déplacement est constitué d'au moins une broche filetée (56, 77, 87) qui coopère avec un écrou (58, 78, 88) monté sur ladite bague extérieure de commande de déplacement.

4. Machine selon la revendication 3, caractérisé par le fait que le mécanisme de déplacement de chaque bague extérieure (60, 79, 89) de commande de déplacement est constitué d'une pluralité de broches filetées régulièrement réparties sur le pourtour qui sont reliées entre elles sur le plan cinématique afin d'assurer une rotation synchrone.

5. Machine selon la revendication 3 et/ou la revendication 4, caractérisé par le fait que les broches filetées et leurs écrous sont des mécanismes à vis à recirculation de billes.

6. Machine selon une ou plusieurs des revendications précédentes, caractérisée par le fait que la transmission du mouvement axial des tiges de poussée (66, 82) aux outils, aux fins de provoquer leur déplacement radial a lieu au moyen d'un segment de renvoi (70) qui est monté sur le plateau circulaire (30) et porte à chacune de ses deux extrémités au moins une attache (68, 74) articulée parmi lesquelles l'une est liée à la tige de poussée et l'autre est liée à un coulisseau plan (32, 34) qui porte l'outil concerné.

7. Machine selon une ou plusieurs des revendications 1 à 5, caractérisée par le fait que la transmission du mouvement axial des tiges de poussée (66') aux outils aux fins de provoquer leur déplacement radial a lieu au moyen d'un segment denté (71) qui est monté sur le plateau circulaire (30') et est lié à une portion de crémaillère (71) à l'extrémité de la tige de poussée (66') et à une portion de crémaillère (73) du coulisseau (32') plan portant l'outil concerné.

8. Machine selon une ou plusieurs des revendications précédentes, caractérisée par le fait que la tige de pousséequi intervient dans l'avance radiale de l'outil à chanfreiner (46) est agencée sous forme de tube creux (82) et que la tige de poussée (92) qui provoque le déplacement axial de l'outil à chanfreiner (46) est disposée coaxialement à l'intérieur dudit tube (82).

9. Machine selon une ou plusieurs des revendications précédentes, caractérisée par le fait qu'une tête (93) de tige de poussée disposée à l'extrémité avant de la tige de poussée (92) qui transmet le mouvement axial de l'outil à chanfreiner (46) est liée au support de porte-outil (42) de l'outil à chanfreiner (46) de manière à transmettre les efforts dans la direction axiale et à permettre le déplacement radial dudit outil.

10. Machine selon une ou plusieurs des revendications précédentes, caractérisée par le fait que le support de porte-outil (42) de l'outil à chanfreiner (46) est articulé sur son coulisseau plan (34) avec possibilité de pivotement autour d'un axe (40) qui s'étend dans la direction tangentielle au voisinage de la surface périphérique extérieure du plateau circulaire (30).

11. Machine selon une ou plusieurs des revendications précédentes, caractérisée par un outil à chanfreiner (46) monobloc avec quatre arêtes de coupe qui forment quatre angles parmi lesquels deux angles sont situés dans un plan normal à l'axe de la machine et deux angles sont situés sur une droite parallèle à l'axe de la machine, les arêtes de coupe situées radialement à l'intérieur qui réalisent le chanfrein des arêtes extérieures des surface de coupe d'une part et les arêtes de coupe situées radialement à l'extérieur qui réalisent le chanfrein des arêtes intérieures des surface de coupe d'autre part formant chaque fois des angles identiques avec le plan normal à l'axe de la machine.

12. Machine selon une ou plusieurs des revendications précédentes, caractérisée par un porte-outil à chanfreiner (100) pouvant être expansé par actionnement au moyen de la tige de poussée (92) correspondante, qui comporte des bras pivotants (102, 103) aux extrémités desquels est fixé chaque fois un outil à chanfreiner (105, 106).

13. Machine selon la revendication 12, caractérisée par le fait que pour provoquer des pivotements dans des directions opposées l'un des bras pivotants (102) pivote autour d'un axe (110) situé radialement à l'intérieur tandis que l'autre bras pivotant (103) pivote autour d'un axe (112) situé radialement à l'extérieur, la tige de poussée (92) agissant sur un bras (102) côté extérieur et ce dernier agissant sur l'autre bras (103) en un point situé entre les axes (110, 112), de manière à transmettre la pression.
